# EUROPEAN PATENT APPLICATION

(11) **EP 1 817 965 A1**
(43) Date of publication of application: **15.08.2007**
(21) Application number: 05811562.7
(22) Date of filing: 02.12.2005
(51) Int. Cl.: A23L 3/40, A23B 7/02

(54) **WATER-SOLUBLE DRY FOOD**

(30) Priority: 03.12.2004 JP 2004351439
(71) Applicant: Arkray, Inc., Kyoto-shi, Kyoto 601-8045 (JP)
(72) Inventor: SASAKI, Takao c/o ARKRAY Inc., Kyoto-shi, Kyoto 6018045 (JP); TAKAYAMA, Kiyofumi c/o ARKRAY Inc., Kyoto-shi, Kyoto 6018045 (JP)
(74) Representative: Pluckrose, Anthony William
(86) International application number: PCT/JP2005/022158
(87) International publication number: WO 2006/059707

(57) **Abstract**

The present invention relates to a water-soluble dry food containing a plant-origin material as the main ingredient and water-soluble dietary fiber as an additive. The water-soluble dry food of the present invention further contains edible oil. Preferably, as the edible oil, use is made of olive oil, safflower oil, sesame oil or rapeseed oil. Preferably, ashitaba is used as the plant-origin material, whereas indigestible dextrin is used as the water-soluble dietary fiber.

## Description

### TECHNICAL FIELD

The present invention relates to water-soluble dry food containing a plant-origin material.

### BACKGROUND ART

Examples of health drinks include green juice called "aojiru" containing a plant component derived from e.g. green and yellow vegetables, and tea containing a plant component derived from green leaves. Originally, such a health drink is expected to exhibit medicinal virtues provided by the plant component. However, to provide other effects, some health drink contains water-soluble dietary fiber typically represented by indigestible dextrin (See Patent Document 1, for example).

Although health drink is generally sold in a liquid state, it is sometimes sold in a dried state such as powder in order that the volume should be reduced and the drink can be preserved for a long time. The dried product is dissolved by the buyer in a solvent such as water and taken in a liquid state.

Water-soluble dietary fiber is not used only for health drink but also widely used for health food (See Patent Document 2, for example). Further, water-soluble dietary fiber is often added to puree containing much sugar to provide dry food which can be preserved for a long time (See Patent Document 3).

However, water-soluble dietary fiber has a property of gelating by absorbing moisture and is often used also as excipient. Therefore, when water-soluble dietary fiber is added to dry food, the solubility of the dry food in a solvent such as water is deteriorated due to the action of the water-soluble dietary fiber. As a result, to dissolve the dry food containing water-soluble dietary fiber in a short time, the use of a high-temperature solvent such as hot water is necessary.

Some dry food is suitable for taking in a state dissolved in hot water, and some dry food is suitable for taking in a state dissolved in a low-temperature solvent. An example of the latter dry food is the drink (green juice called "aojiru") which contains a plant component derived from e.g. green and yellow vegetables. This kind of drink has a grassy smell peculiar to green and yellow vegetables, and the grassy smell is stronger when the drink is hot. Therefore, when the dried product of green juice is dissolved in a high-temperature solvent (hot water), it is hard to drink because of the strong grassy smell. Therefore, for dry food containing water-soluble dietary fiber, a high solubility in a low-temperature solvent (e.g. cold water or normal temperature water) is demanded.
Patent Document 1: JP-A-H07-264987
Patent Document 2: JP-A-2002-171932
Patent Document 3: JP-A-H09-154480

### DISCLOSURE OF THE INVENTION

An object of the present invention is to enhance the solubility of dry food in a solvent, particularly, in a low-temperature solvent.

The inventors of the present invention have found that, in dry food containing a plant-origin material (e.g. material originated from ashitaba or Angelica keiskei) as the main ingredient, high solubility even in cold water can be provided by adding edible oil (e.g. olive oil) along with water-soluble dietary fiber (e.g. indigestible dextrin) as the additives.

That is, the present invention relates to water-soluble dry food containing a plant-origin material as the main ingredient, and edible oil and water-soluble dietary fiber as the additives.

Examples of the material plant which can be used as the main ingredient include green and yellow vegetables, light-colored vegetables, other vegetables and fruits. More specifically, examples of the material plant include ashitaba, kale, parsley, outer leaf of broccoli, Japanese radish leaf, komatsuna, mizuna, spinach, shiso perilla leaf, Jew's mallow leaves, tomato, carrot, balsam pear, cabbage, Chinese cabbage, cauliflower, Welsh onion (leek) , mulberry leaf, tea leaf, mikan (Japanese orange), orange, shekwasha, grapefruit, amanatsu, yuzu, strawberry, apple, grape, Nashi pear, watermelon, banana, mango, peach and lemon. Each of the material plants exemplarily described above may be used alone or in combination. Of course, plants other than those described above may be used as the material plant.

In the present invention, as the material plant, it is preferable to use ashitaba alone or in combination with other plant. Ashitaba is a green and yellow vegetable in the Apiaceae family and contains a large amount of chalcone as the characteristic active component. Examples of the effect of chalcone which have been scientifically proved include the action to lower a blood glucose level, anticancer action, antiulcer action, antithrombotic action, antibacterial action, anti-AIDS action, antiallergic action, anti-vasoconstriction action, and effects on osteoporosis, Alzheimer-type dementia and peripheral neuropathy. Examples of the effect which have been reported include reduction of cholesterol, improvement of liver function, normalization of blood pressure, improvement of atopic dermatitis, improvement of hay fever, improvement of cellulite, relief of excessive sensitivity to cold and swollen limbs, improvement of constipation, prevention of anemia, improvement of hardness of hearing and improvement of bleary eyes. The dry food containing ashitaba as the main ingredient is expected to exhibit the above-described effects.

The main ingredient may be used in the form of paste, in a liquid state or in a powder state.

To prepare the main ingredient in the form of paste, the material plant may be pulverized to prepare a primary paste, and then the primary paste may be subj ected to enzyme treatment. Alternatively, as the main ingredient, the primary paste may be used as it is.

The pulverization of the plant material is so performed that the pulverized material has a grain size of e.g. 10 to 200 µm, and preferably, 50 to 100 µm. The pulverization of the material plant may be performed using a breaker or an attritor. Examples of usable breaker or attritor include a comitrol, a mass colloider, a chopper and a pulper finisher.

The enzyme treatment of the primary paste may be performed by mixing the primary paste and enzyme while stirring so that enzyme acts on the primary paste. Examples of enzyme used for the enzyme treatment include cytoclastic enzyme and amylolytic enzyme. Examples of the cytoclastic enzyme include cellulase, hemicellulase and pectinase. Examples of amylolytic enzyme include α-amylase, β-amylase and glucoamylase. Each enzyme exemplarily described above may be used alone or in combination. Of course, enzyme other than those described above may be used as required.

The temperature for the enzyme treatment may be determined within a range in which the enzyme to be used is not inactivated. Preferably, however, the enzyme treatment is performed at the temperature which is optimum for the enzyme to be used or a temperature close to the optimum temperature, or at ordinary temperatures, and typically, at 20 to 40 °C. The pH in the enzyme treatment may be determined within a range in which the enzyme to be used is not inactivated. Preferably, however, the enzyme treatment is performed at the pH which is optimum for the enzyme to be used or a pH close to the optimum pH. The pH adjustment may be performed using baking soda or citric acid.

In the enzyme treatment, water may be added to the primary paste along with enzyme. The enzyme treatment time may be determined depending on the composition of the paste, the kind of enzyme to be used, the magnitude of enzyme activity, for example. The enzyme reaction can be stopped by inactivating enzyme by heating the enzyme, for example. It is preferable that the primary paste is cooled immediately after the heating.

In the dry food mainly composed of the enzyme-treated ingredient, the cells of the plant-origin material are properly destroyed, and starch is decomposed into glucide. Therefore, the dry food has an enhanced solubility in a solvent such as water.

Examples of water-soluble dietary fiber which can be used in the present invention include indigestible dextrin, polydextrose, inulin, pectin, glucomannan, galactomannan, alginic acid and agarose. Each of the water-soluble dietary fiber exemplarily described above may be used alone or in combination. However, it is preferable to use indigestible dextrin alone or in combination with other water-soluble dietary fiber.

Water-soluble dry food to which water-soluble dietary fiber is added is expected to exhibit the effect of regulating intestinal function, suppressing increase of blood glucose level and lowering cholesterol, for example.

In the water-soluble dry food according to the present invention, the content of water-soluble dietary fiber is set to 3.00 to 50.0 parts by weight per 100 parts by weight of plant-origin material, and preferably, 10.0 to 30.0 parts by weight per 100 parts by weight of plant-origin material. When the content of water-soluble dietary fiber is too low, the effect of water-soluble dietary fiber cannot be enjoyed sufficiently. When the content of water-soluble dietary fiber is too high, the cost performance is deteriorated, because large effect corresponding to the high content cannot be enjoyed.

In the present invention, both of vegetable oil and animal oil are usable as the edible oil. Since the dry food of the present invention is to be taken into a human body, edible oil which is not detrimental to human health needs to be used.

Examples of edible vegetable oil include olive oil, sesame oil, rapeseed oil, safflower oil, sunflower oil, corn oil, peanut oil, walnut oil, soybean oil, rice bran oil, coconut oil and palm oil. Examples of edible animal oil include beef tallow, lard, butter and fish oil (such as sardine oil, tuna oil, bonito oil and mackerel oil). The oils exemplarily described above may be used alone or in combination. Among the above, however, it is preferable to use olive oil, sesame oil, rapeseed oil or safflower oil alone or in combination. Most preferably, olive oil is used alone or in combination with other edible oil.

Water-soluble dry food to which edible oil is added is expected to exhibit the effect of lowering cholesterol, the anti-allergic action, and the effect of improving hay fever, for example.

In the dry food according to the present invention, the content of edible oil is set to 0.1 to 4.0 parts by weight per 100 parts by weight of plant-origin material, and 0.5 to 200 parts by weight per 100 parts by weight of water-soluble dietary fiber. When the content of edible oil is too low, the deterioration of solubility of dry food caused by the addition of water-soluble dietary fiber cannot be improved effectively. When the content of edible oil is too high, large effect corresponding to the high content cannot be enjoyed, and the flavor in drinking the dry food is deteriorated.

In addition to edible oil and water-soluble dietary fiber, other additives may be used as required. Examples of usable additives other than edible oil and water-soluble dietary fiber include the ones for changing the taste or flavor of the dry food (e.g. sugar, salt, seasoning, spice), antioxidant (e.g. vitamin C, vitamin E) , thickening agent (xanthan gum, gum arabic), emulsifying agent (lecithin, sugar ester), nutritious supplement (royal jelly, vitamins, minerals, lecithin, soy protein), excipient, extender, and binder.

The water-soluble dry food according to the present invention can be manufactured by preparing material liquid by mixing the main ingredient and additives and then drying the material liquid.

The material liquid may be prepared just by mixing the main ingredient and additives or by mixing the main ingredient and additives in a state in which liquid food such as water is added. However, when an excessively large amount of liquid food is added, the subsequent drying cannot be performed efficiently. Further, in the case where the dry food is to be provided as shaped food, the addition of excess liquid food increases the porosity of the shaped food and increases the apparent volume of the dry food. Therefore, it is preferable that the amount of liquid food to be added is set to the minimum necessary.

The drying of the material liquid may be performed by freeze-drying, spray drying, hot-air drying, high-pressure steam drying, far-infrared drying or electromagnetic wave drying, for example. Among these techniques, it is preferable to employ freeze-drying, because the deterioration of the quality of the materials due to freeze-drying is less than that caused by other techniques.

The freeze-drying technique includes a pre-drying step and a vacuum freeze drying step.

The pre-freezing is performed by cooling the material liquid loaded in a container at a temperature below -20 to -40°C for 10 to 30 hours to completely freeze the material liquid.

As the container for loading the material liquid, use may be made of one made of metal such as aluminum or stainless steel, or one made of plastic such as polyethylene or polypropylene. The shape and volume of the container may be selected appropriately depending on the purpose. In the case where the dried product after the vacuum freeze drying is to be provided as it is as the dry food product, use may be made of a container provided with a partition corresponding to the shape of the product such as a square, a rectangle or a triangle. In the case where the dried product after the vacuum freezing is to be crushed or cut, use may be made of a container which is capable of forming a dried product having a shape which can be readily crushed or cut.

The vacuum freeze drying step is performed by keeping the frozen material at a pressure of 1 Torr or less (preferably 0.7 Torr or less) for 10 to 30 hours until the moisture content is finally reduced to 5 % or lower.

After the pre-drying or the vacuum freeze drying, the dried product is crushed or cut as required.

### BRIEF DESCRIPTION OF THE DRAWINGS

Fig. 1 shows the results of solubility test in Example 1 as a graph showing variation of weight of undissolved residue of each sample with time.
Fig. 2 shows the results of solubility test in Example 3 as a graph showing variation of weight of undissolved residue of each sample with time.
Fig. 3 shows the results of solubility test in Example 5 as a graph showing variation of weight of undissolved residue of each sample with time.
Fig. 4 shows the results of solubility test in Example 7 as a graph showing variation of weight of undissolved residue of each sample with time.
Fig. 5 shows the results of solubility test in Example 9 as a graph showing variation of weight of undissolved residue of each sample with time.

### Example 1

In this example, as shown in Table 1 below, solubility was examined with respect to four samples which differ from each other in composition of additives (indigestible dextrin) (See Table. 1).

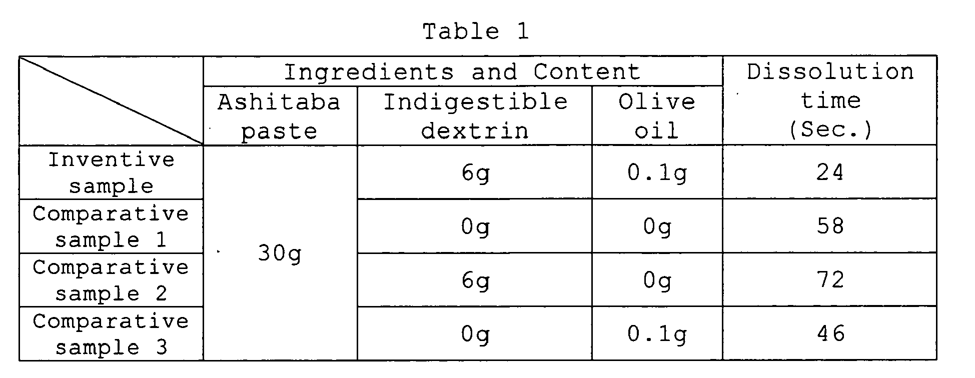

Each of the samples was block-shaped freeze-dried food produced by mixing the above-described ingredients to prepare a sample solution, loading the sample solution into a container, and then subjecting the sample solution in the container to freeze-drying (pre-freezing/vacuum freeze-drying).

Specifically, to prepare the sample solution, small amount of boiling water was poured into indigestible dextrin (tradename: Fibersol-2; available from Matsutani Chemical Industry Co., Ltd.) and stirred while being heated, whereby a solution of indigestible dextrin was obtained. Then, 30g of ashitaba paste was put into a beaker, and a predetermined amount of indigestible dextrin, olive oil or the same amount of water was added. Then, stirring was performed using a stirring rod to uniformly disperse these ingredients, whereby the sample solution was prepared.

The ashitaba paste was prepared by putting fresh ashitaba bought on that day into a blender. As the olive oil, commercially available olive oil was used. As the comparative sample 1, ashitaba paste prepared as described above was used as it was.

As the container for performing freeze-drying, a plastic tray which was 50 mm in length, 45 mm in width and 22 mm in depth was used.

The pre-freezing was performed by putting the container loaded with sample solution in a deep freezer and performing cooling at -80 °C for 12 hours to completely freeze the sample solution.

In the vacuum freeze-drying, the pre-frozen sample was set in a freeze drier (tradename: FDU-506; available from Tokyo Rikakikai Co. , Ltd.) and subjected to freeze-drying for 48 hours until the moisture content was reduced to 5 % or lower. By the vacuum freeze-drying, the block-shaped samples were obtained.

To examine the solubility of the samples, each of the samples was immersed in cold water, and the weight of residue which remained undissolved while containing moisture was measured over time.

Specifically, to examine the solubility, a metal mesh (opening size: 2.0 mm x 2.0 mm) holding the sample was set to a bowl, and then 100 ml of cold water (4°C) was pored into the bowl to completely impregnate the sample with water.

After water was poured, the mesh was quickly separated from the bowl, and excess moisture remaining on the sample and the mesh was drained off on the bowl. In this state, the total weight of the mesh and the sample containing moisture was measured. The weight of the mesh had been measured in advance, and the difference obtained by subtracting the weight of the mesh from the above-described total weight was determined as the initial weight of the sample.

Then, the mesh was set to the bowl again, and the sample was immersed in water in the bowl for two seconds. Thereafter, the total weight of the mesh and the undissolved residue of the sample was measured similarly to the above. The difference obtained by subtracting the weight of the mesh from the total weight was determined as the weight of the residue. Thereafter, similarly to the above, the immersion of the sample in water for two seconds and the subsequent measurement of the weight of residue were repeated until the weight of residue becomes zero.

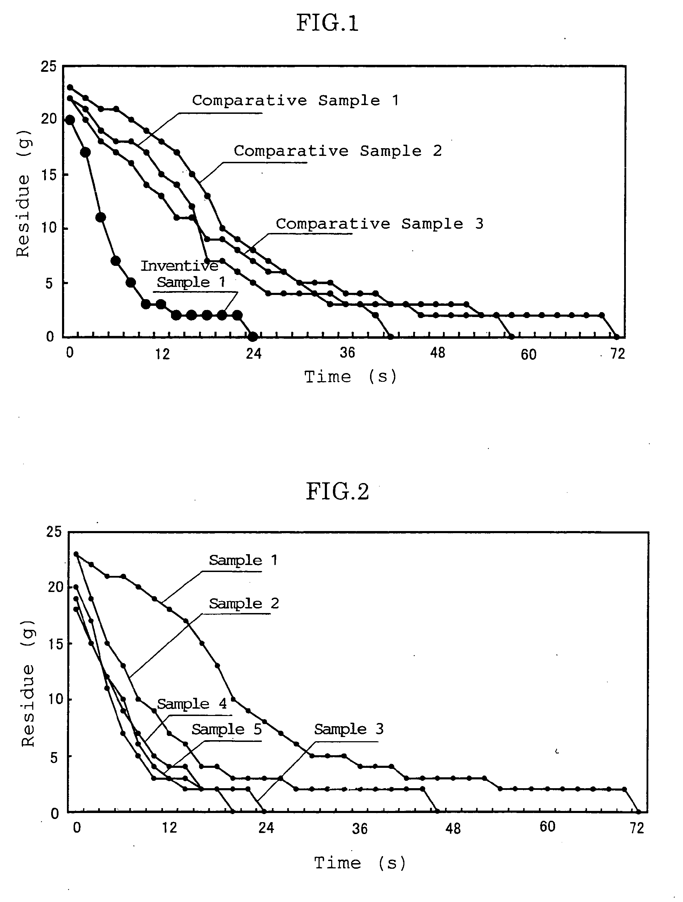

The results of examination of solubility of the samples are shown in Fig. 1 as variation of weight of undissolved residue with time and also shown in Table 1 as the time required for completely dissolving the samples (dissolution time).

As will be understood from Fig. 1 and Table 1, the solubility of the comparative sample 2 containing ashitaba and indigestible dextrin is lower than that of the comparative sample 1 made of ashitaba alone. This fact indicates that indigestible dextrin, which is water-soluble dietary fiber, deteriorates the solubility of the sample. Conceivably, in the sample containing indigestible dextrin (water-soluble dietary fiber), indigestible dextrin quickly absorbs moisture and aggregates to form micelle, whereby the solubility is deteriorated.

The comparative sample 3 and the inventive sample, which contain olive oil, have a higher solubility than those of the comparative samples 1 and 2, which do not contain olive oil. This indicates that olive oil, which is edible oil, enhances the solubility of the samples. Conceivably, olive oil infiltrates into the aggregate block of grains and acts to make the aggregate block smaller.

Particularly, the inventive sample prepared by adding olive oil along with indigestible dextrin to ashitaba has a considerably high solubility as compared with other samples (comparative samples 1-3). As will be understood from Table 1, the dissolution time of the inventive sample is considerably shorter than those of other samples. Conceivably, this is because the existence of olive oil (oil content) hinders the formation of micelle by indigestible dextrin in the freeze-dried sample, and indigestible dextrin exhibits only the function to quickly absorb moisture so that the solubility of the freeze-dried sample is considerably enhanced.

From the results of Example 1, it is found that, when water-soluble dietary fiber such as indigestible dextrin is to be added to water-soluble dry food, it is desirable to further add oil such as olive oil to enhance the solubility of the dry food in a solvent such as water. Further, even when the addition of water-soluble dietary fiber is not essentially necessary, the addition of water-soluble dietary fiber together with oil can enhance the solubility.

### Example 2

In this example, the drinkability of drink containing ashitaba paste as the main ingredient was examined by a sensory test. Specifically, in the sensory test, four sample drinks were prepared by completely dissolving each of the samples (dry food) shown in Table 1 in 100 ml of water (4 °C), and test users evaluated the drinkability of each sample drink in four grades, "most drinkable and palatable: ⓞ", "palatable : o", "a little hard to drink: Δ" and "hard to drink: x". The results are given in Table 2 below.

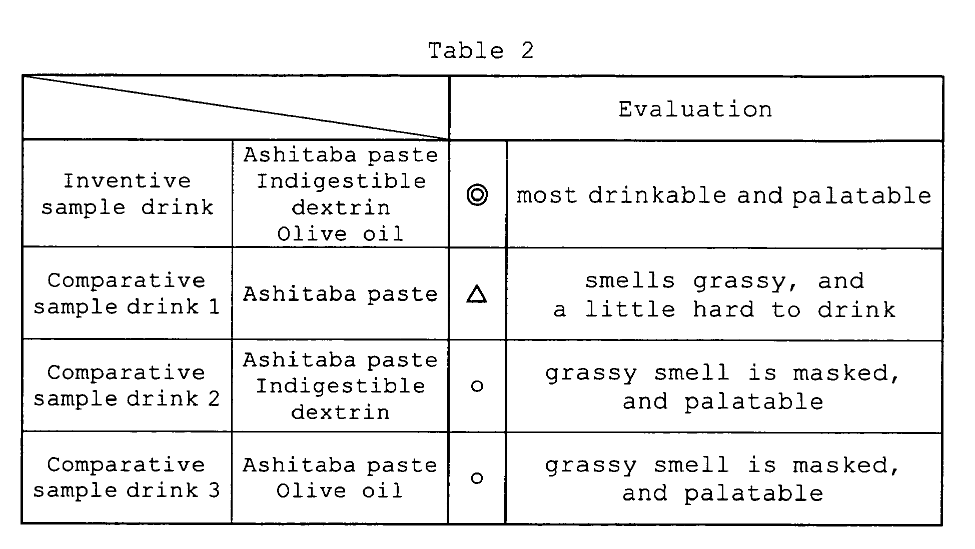

As will be understood from Table 2, the inventive sample drink containing indigestible dextrin and olive oil along with ashitaba paste was highly rated by the test users as compared with the comparative samples 1-3 which did not contain at least one of indigestible dextrin and olive oil. Thus, it is found that dry food containing indigestible dextrin and olive oil along with ashitaba paste has less grassy smell in dissolving the food in a solvent and drinking.

### Example 3

In this example, the effect of the content of olive oil on the solubility of freeze-dried food was examined using a plurality of samples of different olive oil content. The olive oil content in each sample is shown in Table 3 below. The samples differ from each other only in olive oil content. The preparation of the samples and the determination of the solubility were performed similarly to Example 1. The results are shown in Fig. 2 and Table 3.

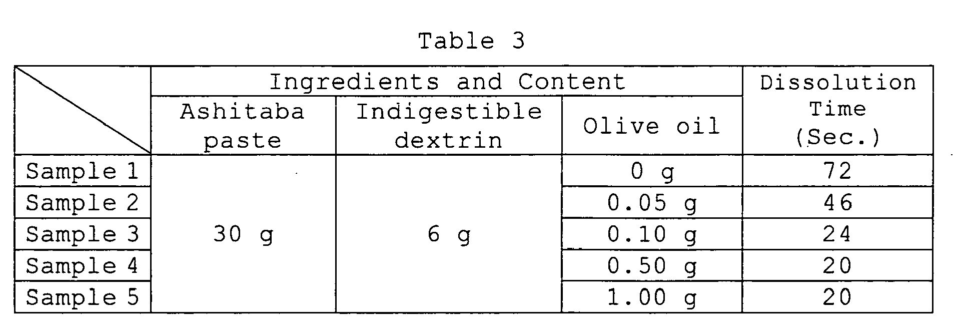

As shown in Fig. 2 and Table 3, the samples to which olive oil was added showed high solubility of a practical level in a low-temperature (4°C) solvent even when the amount of the added olive oil was small like samples 2 and 3. That is, the solubility of the samples (dry food) was enhanced by the addition of a small amount of olive oil. Practically, it is found that the addition of olive oil achieves sufficient improvement of solubility when the content of olive oil in the dry food is not less than 0.1 part by weight per 100 parts by weight of ashitaba paste and not less than 0.5 part by weight per 100 parts by weight of indigestible dextrin.

### Example 4

In this example, the drinkability of sample drinks containing olive oil was examined by a sensory test. Specifically, in the sensory test, sample drinks were prepared by completely dissolving each of the five samples (dry food) shown in Table 3 in 100 ml of water (4°C), and test users evaluated the drinkability of each sample drink in four grades, similarly to Example 2. The results are given in Table 4 below.

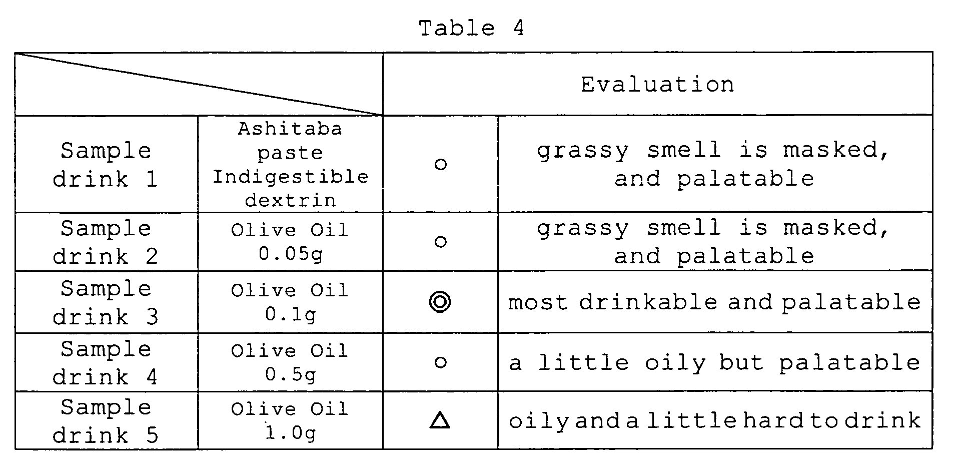

As will be understood from Table 4, in the examination of the effect of the addition of olive oil to the samples containing ashitaba paste and indigestible dextrin, the sample drink 3 containing 0.1 g of olive oil was most highly rated by the test users. The drinkability of the samples to which a larger amount of olive oil was added than that added to the sample 3 were rated lower by the test users. This indicates that the addition of olive oil by an amount larger than necessary even deteriorates the flavor in drinking the dry food and cannot provide a large benefit corresponding to the large amount of olive oil.

### Example 5

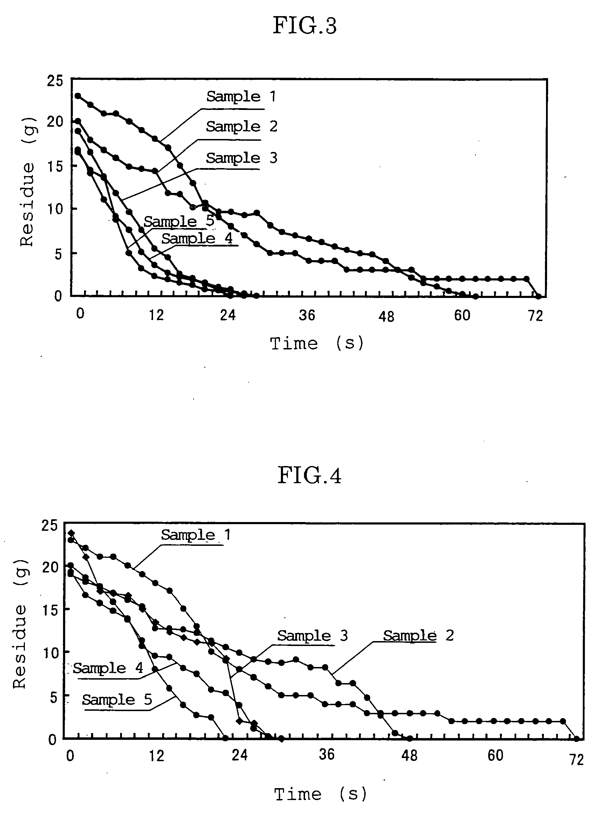

In this example, the effect of the content of safflower oil on the solubility of freeze-dried food was examined using a plurality of samples of different safflower oil content. The safflower oil content in each sample is shown in Table 5 below. The samples differ from each other only in safflower oil content. The preparation of the samples and the determination of the solubility were performed similarly to Example 1. The results are shown in Fig. 3 and Table 5.

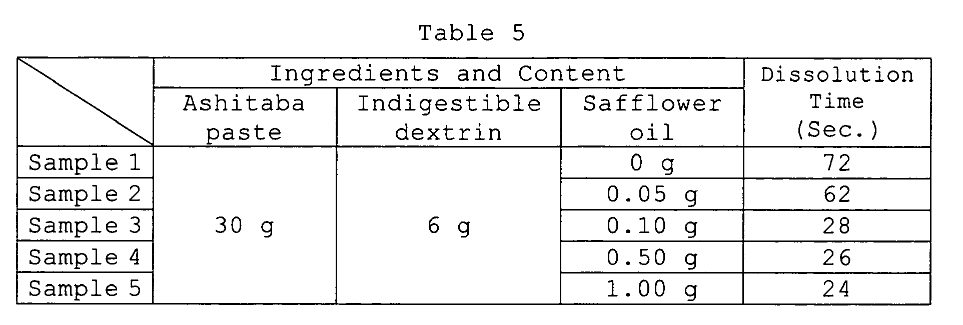

As shown in Fig. 3 and Table 5, as compared with sample 1 to which safflower oil was not added, the samples to which safflower oil was added showed a higher solubility in a low-temperature (4 °C) solvent even when the amount of safflower oil was small like samples 2 and 3. That is, the solubility of the samples (dry food) was enhanced by the addition of a small amount of safflower oil. Practically, it is found that the addition of safflower oil achieves sufficient improvement of solubility when the content of safflower oil in the dry food is not less than 0.1 part by weight per 100 parts by weight of ashitaba paste and not less than 0.5 part by weight per 100 parts by weight of indigestible dextrin.

### Example 6

In this example, the drinkability of sample drinks containing safflower oil was examined by a sensory test. Specifically, in the sensory test, sample drinks were prepared by completely dissolving each of the five samples shown in Table 6 in 100 ml of water (4°C), and test users evaluated the drinkability of each sample drink in four grades, similarly to Example 2. The results are given in Table 6 below.

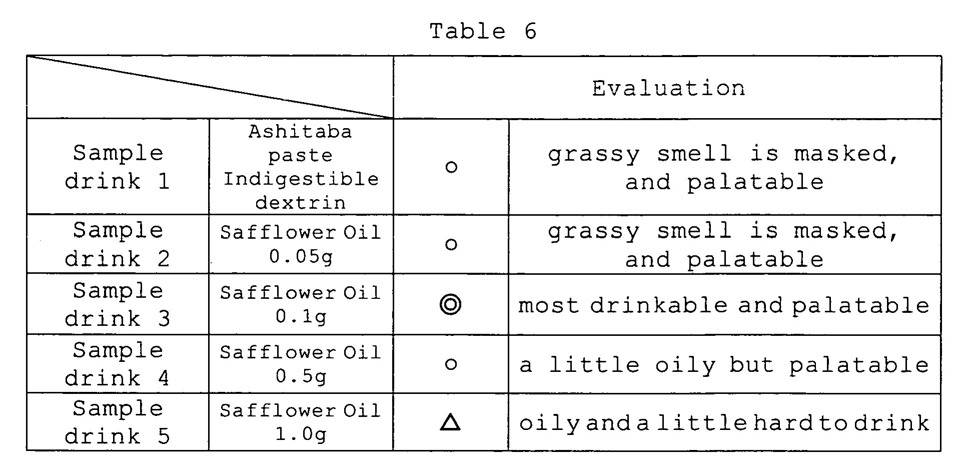

As will be understood from Table 6, in the examination of the effect of the addition of safflower oil to the samples containing ashitaba paste and indigestible dextrin, the sample drink 3 containing 0.1 g of safflower oil was most highly rated by the test users. The drinkability of the samples to which a larger amount of olive oil was added than that added to the sample 3 were rated lower by the test users. This indicates that the addition of safflower oil by an amount larger than necessary even deteriorates the flavor in drinking the dry food and cannot provide a large benefit corresponding to the large amount of safflower oil.

### Example 7

In this example, the effect of the content of sesame oil on the solubility of freeze-dried food was examined using a plurality of samples of different sesame oil content. The sesame oil content in each sample is shown in Table 7 below. The samples differ from each other only in sesame oil content. The preparation of the samples and the determination of the solubility were performed similarly to Example 1. The results are shown in Fig. 4 and Table 7.

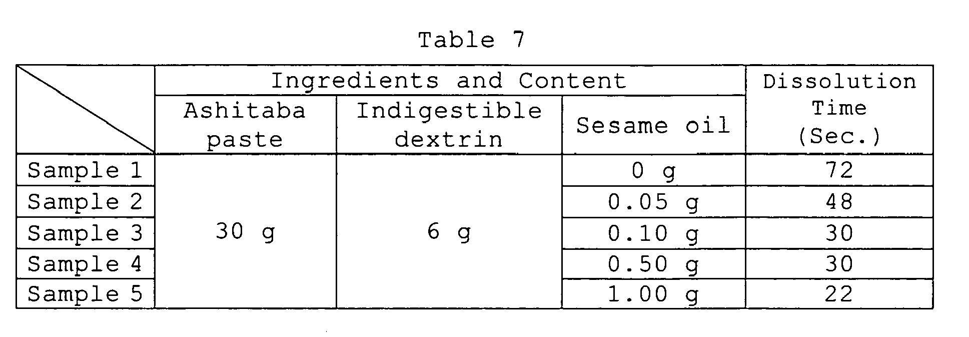

As shown in Fig. 4 and Table 7, the samples to which sesame oil was added showed high solubility of a practical level in a low-temperature (4°C) solvent even when the amount of the added sesame oil was small like samples 2 and 3. That is, the solubility of the samples (dry food) was enhanced by the addition of a small amount of sesame oil. Practically, it is found that the addition of sesame oil achieves sufficient improvement of solubility when the content of sesame oil in the dry food is not less than 0.1 part by weight per 100 parts by weight of ashitaba paste and not less than 0.5 part by weight per 100 parts by weight of indigestible dextrin.

### Example 8

In this example, the drinkability of sample drinks containing sesame oil was examined by a sensory test. Specifically, in the sensory test, sample drinks were prepared by completely dissolving each of the five samples shown in Table 8 in 100 ml of water (4°C), and test users evaluated the drinkability of each sample drink in four grades, similarly to Example 2. The results are given in Table 8 below.

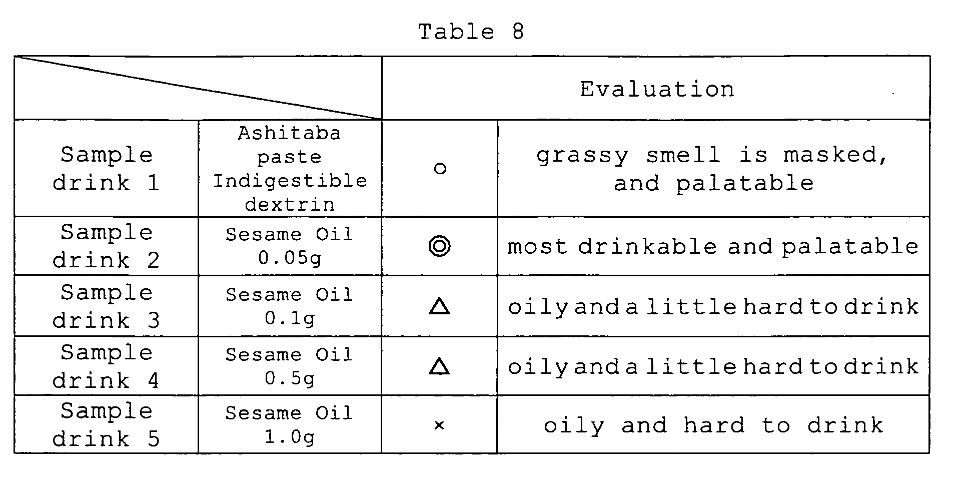

As will be understood from Table 8, in the examination of the effect of the addition of sesame oil to the samples containing ashitaba paste and indigestible dextrin, the sample drink 2 containing 0.05 g of sesame oil was most highly rated by the test users. The drinkability of the samples to which sesame oil was added by an amount larger than that added to sample 2 was rated lower by the test users. This indicates that, because of the relatively strong flavor of sesame oil, the addition of sesame oil by a slightly larger amount deteriorates the drinkability. Practically, the addition of sesame oil by an amount larger than necessary even deteriorates the flavor in drinking the dry food and cannot provide a large benefit corresponding to the large amount of sesame oil.

### Example 9

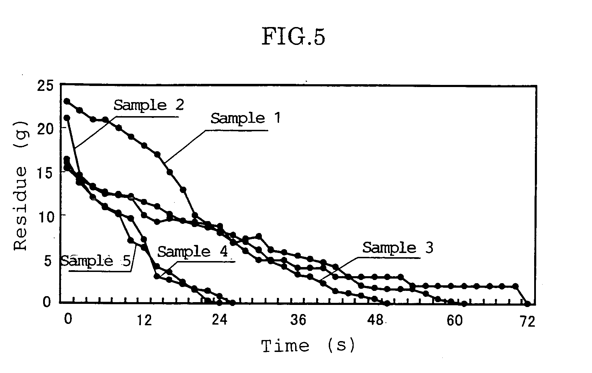

In this example, the effect of the content of rapeseed oil on the solubility of freeze-dried food was examined using a plurality of samples of different rapeseed oil content. The rapeseed oil content in each sample is shown in Table 9 below. The samples differ from each other only in rapeseed oil content. The preparation of the samples and the determination of the solubility were performed similarly to Example 1. The results are shown in Fig. 5 and Table 9.

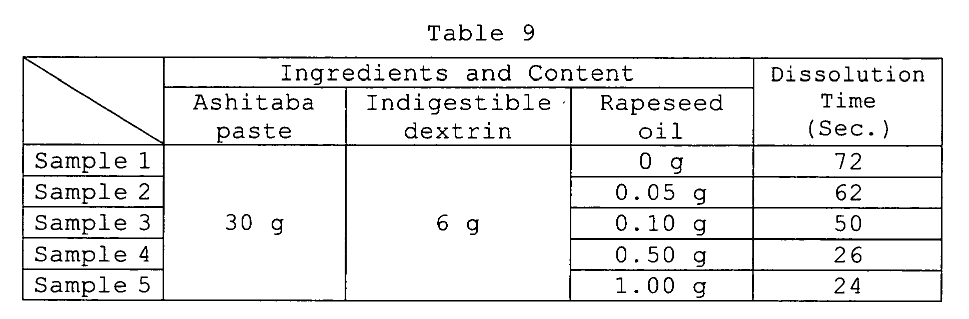

As shown in Fig. 5 and Table 9, as compared with sample 1 to which rapeseed oil was not added, the samples to which rapeseed oil was added showed a higher solubility in a low-temperature (4 °C) solvent even when the amount of the added rapeseed oil was small. That is, the solubility of the samples (dry food) was enhanced by the addition of a small amount of rapeseed oil. Practically, it is found that the addition of rapeseed oil achieves sufficient improvement of solubility when the content of rapeseed oil in the dry food is not less than 0.1 part by weight per 100 parts by weight of ashitaba paste and not less than 0.5 part by weight per 100 parts by weight of indigestible dextrin.

### Example 10

In this example, the drinkability of sample drinks containing rapeseed oil was examined by a sensory test. Specifically, in the sensory test, sample drinks were prepared by completely dissolving each of the five samples shown in Table 10 in 100 ml of water (4°C), and test users evaluated the drinkability of each sample drink in four grades, similarly to the Example 2. The results are given in Table 10 below.

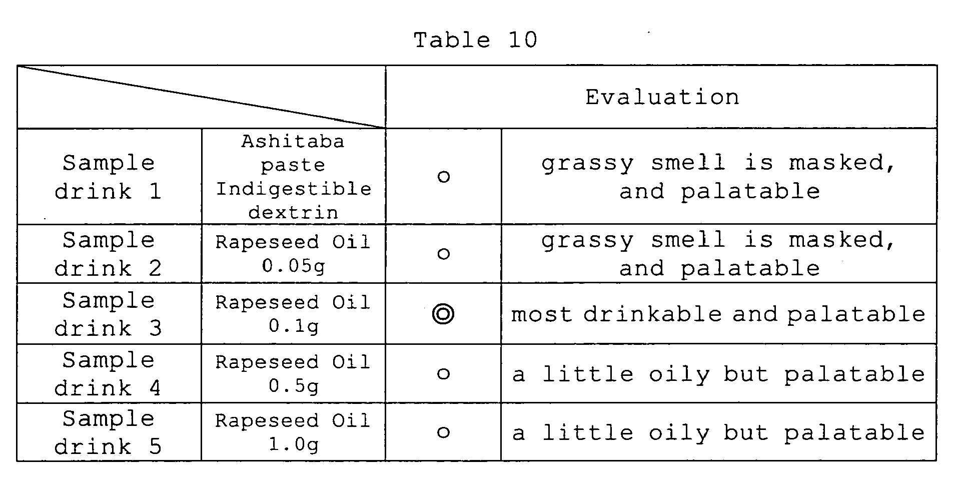

As will be understood from Table 10, in the examination of the effect of the addition of rapeseed oil to the samples containing ashitaba paste and indigestible dextrin, the sample drink 3 containing 0.1 g of rapeseed oil was most highly rated by the test users. The evaluation of drinkability by the test users was not so deteriorated even when rapeseed oil was added by an amount larger than that added to sample 2. This is because the flavor of rapeseed oil is relatively weak.

In this way, although the water-soluble dry food according to the present invention contains water-soluble dietary fiber which deteriorates the solubility by itself, the water-soluble dry food can exhibit an excellent solubility in a low-temperature solvent because of the addition of edible oil along with the water-soluble dietary fiber.

Even when the water-soluble dry food is prepared by using plants such as green and yellow vegetables, by containing edible oil along with water-soluble dietary fiber in the water-soluble dry food, the grassy smell peculiar to green and yellow vegetables can be suppressed so that the drinkability is enhanced, while a high solubility in a low temperature solvent such as water can be exhibited.

The solubility in a low-temperature solvent is further enhanced when the dry food is made based on enzyme-treated paste. For instance, paste of a plant material may first be prepared, and then amylolytic enzyme may be added to the paste. In this case, the deterioration of solubility caused by starch can be suppressed. Further, when cytoclastic enzyme is added, the particle diameter of the plant-origin material in the paste can be reduced, so that the solubility is enhanced.

## Claims

1. A water-soluble dry food containing a plant-origin material as a main ingredient and water-soluble dietary fiber as an additive;
wherein the water-soluble dry food further contains edible oil as an additive.

2. The water-soluble dry food according to claim 1, wherein, the water-soluble dry food contains, as the edible oil, at least one selected from the group consisting of olive oil, safflower oil, sesame oil and rapeseed oil.

3. The water-soluble dry food according to claim 2, wherein, the water-soluble dry food contains, as the edible oil, olive oil alone.

4. The water-soluble dry food according to claim 2, wherein, the water-soluble dry food contains, as the edible oil, safflower oil alone.

5. The water-soluble dry food according to claim 2, wherein, the water-soluble dry food contains, as the edible oil, sesame oil alone.

6. The water-soluble dry food according to claim 2, wherein, the water-soluble dry food contains, as the edible oil, rapeseed oil alone.

7. The water-soluble dry food according to claim 1, wherein content of the edible oil is 0.1 to 4.0 parts by weight per 100 parts by weight of the plant-origin material.

8. The water-soluble dry food according to claim 1, wherein content of the edible oil is 0.5 to 20.0 parts by weight per 100 parts by weight of water-soluble dietary fiber.

9. The water-soluble dry food according to claim 1, wherein the plant-origin material is obtained from a vegetable or a fruit.

10. The water-soluble dry food according to claim 9, wherein the plant-origin material is obtained from ashitaba.

11. The water-soluble dry food according to claim 1, wherein the water-soluble dietary fiber is indigestible dextrin.

12. A water-soluble dry food containing a material originating from ashitaba as a main ingredient and indigestible dextrin as an additive;
wherein the water-soluble dry food further contains edible oil as an additive; and
wherein, the water-soluble dry food contains, as the edible oil, at least one selected from the group consisting of olive oil, safflower oil, sesame oil and rapeseed oil.

13. The water-soluble dry food according to claim 12, wherein the water-soluble dry food contains olive oil as the edible oil.

14. The water-soluble dry food according to claim 12, wherein content of the edible oil is 0.1 to 4.0 parts by weight per 100 parts by weight of the material originating from ashitaba.

15. The water-soluble dry food according to claim 12, wherein content of the edible oil is 0.5 to 20.0 parts by weight per 100 parts by weight of indigestible dextrin.
